# EUROPEAN PATENT SPECIFICATION

(11) **EP 3 802 890 B1**
(45) Date of publication and mention of the grant of the patent: **01.10.2025**
(21) Application number: 19734890.7
(22) Date of filing: 27.05.2019
(51) Int. Cl.: C22B 7/00, C22B 3/00

(54) **HYDROMETALLURGICAL METHOD FOR THE RECOVERY OF BASE METALS AND PRECIOUS METALS FROM A WASTE MATERIAL**
HYDROMETALLURGISCHES VERFAHREN ZUR RÜCKGEWINNUNG VON BASISMETALLEN UND EDELMETALLEN AUS ABFALLSTOFFEN
PROCÉDÉ HYDROMÉTALLURGIQUE POUR LA RÉCUPÉRATION DE MÉTAUX DE BASE ET DE MÉTAUX PRÉCIEUX À PARTIR D'UN DÉCHET

(30) Priority: 29.05.2018 IT 201800005826
(43) Date of publication of application: 14.04.2021
(73) Proprietor: Universita' Degli Studi Dell'Aquila, 67100 L'Aquila (IT)
(72) Inventor: BIRLOAGA, Ionela, 67100 L'Aquila (IT); VEGLIO', Francesco, 67100 L'Aquila (IT)
(74) Representative: Cavattoni, Raimondi & Luppi Srl
(86) International application number: PCT/IB2019/054381
(87) International publication number: WO 2019/229632

(56) References cited:
- WO-A1-2016/168933
- WO-A2-2012/024603
- LU YAN ET AL: "Precious metals recovery from waste printed circuit boards: A review for current status and perspective", RESOURCES, CONSERVATION AND RECYCLING, ELSEVIER, AMSTERDAM, NL, vol. 113, 3 June 2016 (2016-06-03), pages 28 - 39, XP029643472, ISSN: 0921-3449, DOI: 10.1016/J.RESCONREC.2016.05.007

## Description

### Field of the invention

The present invention relates to an innovative hydrometallurgical method for the recycling and recovery of base metals such as copper (Cu), tin (Sn), lead (Pb) and nickel (Ni) and precious metals such as gold (Au) and silver (Ag) from electronic boards or printed circuits of electrical and electronic equipment, typically from electronic boards of personal computers and cellular phones (in particular smartphones).

### Present state of the art

The electronic board (printed circuit board or PCB) or printed circuit is an important component of most electrical and electronic equipment (EEE).

The current innovations in the production of these devices have resulted in a significant reduction in the working life of devices and electronic boards (e.g. 2-3 years for cellular phones and 3-5 years for personal computers, etc.).

Consequently, most broken devices are no longer repaired and therefore regarded as waste which is then disposed of mainly in waste tips.

However, the discarding and disposal of said waste electronic boards in waste tips is discouraged also for environmental reasons, and various technologies for processing said boards have been tested in order to reduce the quantity of waste and recover their precious content.

Waste printed circuit boards (WPCB), which are made up of about 60 elements, have attracted a great deal of attention because of their recovery and recycling potential. This is due mainly to their content of precious metals (in particular gold, Au).

Hitherto numerous methods aimed at the recovery and recycling of base metals (i.e. Cu, Sn, Pb, Ni, zinc Zn, iron Fe and aluminium Al) and precious metals (i.e. gold Au and silver Ag) from electronic boards or printed circuits of electronic equipment are known and many form the subject of patent applications or patents.

The technologies for recycling base metals and precious metals known in the art consist of physical/mechanical and chemical procedures for recovery of said metals. With the physical/mechanical procedures, however, it is not possible to obtain complete separation of the valued metals in a single fraction and therefore these procedures are used mainly as a pre-treatment step in a chemical method (see Korean patent application KR 20030006792 A in this respect). Moreover, a physical/mechanical pre-treatment procedure may result in the diffusion, in the air, of small metal particles, especially where particles of gold are involved, these being particularly prone to this reaction.

The chemical procedures for the recovery and recycling of base metals consist in pyrometallurgical, hydrometallurgical or biometallurgical methods (see the patent applications CN 105420500 (A), CN 105297077 (A), CN 106500113 (A), CN 104775034 (A), CN 104328283 (A), EP 2984153 (A2), CN 103801554 (A), CN 103484680 (A), US 2012318681 (A1) and WO 2015052658 (A1)).

Compared to the pyrometallurgical and biometallurgical methods, hydrometallurgical methods have the advantage that the processing operations may be controlled more easily; said methods also do not result in the emission of toxic fumes, require a smaller outlay and have a faster reaction time.

Pyrometallurgical methods, in particular, require temperatures close to 1200°C and are particularly costly and polluting.
US 2012318681 describes a mechanical/physical/thermal/wet method for the recovery of Cu, Au, Pb, palladium Pd, platinum Pt, Sn, Ag and other metals. Said method involves a first step where the boards are ground, then undergo physical separation by means of air classification and then the copper concentrate which also contains other elements (Sn, Pb, Au, Ag, Pd and Pt) undergoes a heat treatment. Then, by means of hydrometallurgical processes, the selective recovery of the elements is performed. Said method is particularly long and complex (it comprises at least eight steps) and, in order to recover the copper, it involves the use of a solution which contains sulphuric acid, sodium chloride and manganese dioxide (MnO₂). As is known, manganese dioxide is self-heating and may catch fire and is harmful for operators and therefore should be avoided.

WO 2015/052658 (A1) describes a hydrometallurgical method for the recovery of metals from electronic boards which comprises a leaching step in which the electronic board is immersed in a solution containing at least 20% by weight of nitric acid and with a solid/liquid ratio equal to or less than 1 and wherein leaching is performed optionally in the presence of a peroxide. Said method is intended mainly to recover Sn, Au, Pb, Ag, Fe and Cu.

In any case, said method envisages the use of nitric acid, which is very corrosive and very difficult to eliminate from the wastewater which is produced at the end of the process. Moreover, it has been noted that even when using this method, the yield levels for recovery of the metals, in particular Sn, Au, Pb, Ag and Cu, which are achieved, and likewise the quality of the metals, are not very high.

WO 2012/024603 (A2) discloses processes for recycling electronic components removed from printed wire boards, whereby precious metals and base metals are extracted from the electronic components using environmentally friendly compositions. At least gold, silver and copper ions can be extracted from the electronic components and reduced to their respective metals using the processes and compositions described herein. In particular, said processes present different solubilisation systems and reduction/precipitation methods for the recovery of base and precious metals for e-waste. Their application consists of a series of procedures for the treatment of the crushed/grinded e-waste using different reagents and oxidants mixtures. These chemicals mix in various concentrations was performed to determine their efficiency of Au, Ag and Cu leaching from waste printed circuit boards and its components. Then, standard solutions of AuCl₃, AgNO₃ and CuSO₄ were mixed with 0.05 M of HCl solution and subjected to precipitation/reduction processes for selective recovery. These processes have only presented certain achievements on metals recovery and not a fully technology of processing.

There exists therefore the need for a hydrometallurgical method for the recycling and recovery of base metals such as Cu, Sn, Pb and Ni and precious metals such as Au and Ag which overcomes the disadvantages and drawbacks of the methods according to the prior art.

### Summary of the invention

A hydrometallurgical method for the recycling and recovery of base metals, such as Cu, Sn, Pb and Ni, and precious metals, such as Au and Ag, from a waste material comprising catalytic converter powder and/or electronic boards of electrical and electronic equipment, has been surprisingly discovered.

The hydrometallurgical method according to the present invention is very simple, does not require a large outlay and is able to achieve a high yield in terms of recovery of the said metals from the surface of the waste material.

The present invention therefore relates first and foremost to a hydrometallurgical method for the recycling and recovery of base metals and precious metals from a waste material comprising catalytic converter powder and/or electronic boards of electrical and electronic equipment, the hydrometallurgical method comprising the following stages:
**I)** Leaching the base metals and the precious metals from the surface of said waste material by means of immersion of the waste material, if necessary pre-treated, in an acid solution containing water, acetic acid, hydrochloric acid, hydrogen peroxide (H₂O-C₂H₄O₂-HCl-H₂O₂) and subsequent removal of the waste material from the acid solution as defined above;
**II-A)** selective recovery of the precious metals silver (Ag) and gold (Au) from the acid aqueous solution obtained in stage I) in the case where said waste material comprises electronic boards of electronic equipment;
**III)** selective recovery of the base metals copper (Cu), tin (Sn), lead (Pb) and nickel (Ni) from the acid aqueous solution obtained from the stage II-A);
**II-B)** selective recovery of platinum (Pt) and palladium (Pd) from the aqueous acid solution obtained from stage I) in the case where said waste material comprises catalytic converters in powder form.

The dependent claims describe preferred embodiments of the invention, forming an integral part of the present description.

### Brief description of the figures

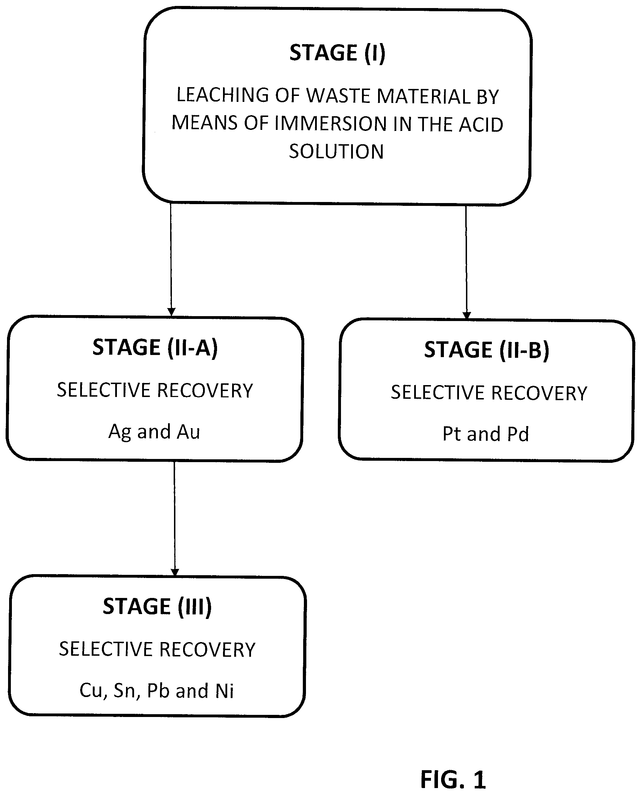

The Figure shows a block diagram of the hydrometallurgical method according to the present invention.

In the case where the waste material comprises electronic boards of electrical and/or electronic equipment, stage (I) of leaching the waste material, stage II-A) of selectively recovering silver and gold, and finally stage (III) of selectively recovering copper, tin, lead and nickel are performed in sequence.

In the case where the waste material comprises catalytic converter powder, stage (I) of leaching the waste material, followed by stage II-B) for selectively recovering platinum and palladium, are performed in sequence.

### Detailed description of the invention

In accordance with the present invention the terms "printed circuit" and "electronic board" are used interchangeably.

The electronic board, in accordance with the present invention, may be the electronic board of a personal computer or a cellular phone, such as a smartphone.

Preferably the electronic board used in the hydrometallurgical method according to the present invention is a waste electronic board or a waste printed circuit of a personal computer or a cellular phone, such as a smartphone. In accordance with a particularly preferred aspect of the present invention the electronic board is a waste electronic board of a personal computer.

Said electronic board (or printed circuit), in order to undergo the leaching stage I), must not have electrolytic capacitors containing Al (aluminium), heat dissipators, batteries, connection peripherals, plastic connectors, transistor-type components and steel components in general. Therefore, if the aforementioned components are present on the electronic board or printed circuit, the board or printed circuit may be pre-treated preferably manually so that said components are removed.

In the case where the waste material to be treated consists of catalytic converters, before subjecting them to the hydrometallurgical treatment grinding of the catalytic converters is performed: in this way the size suitable for the hydrometallurgical process is obtained.

Stage I) of leaching the base metals (Cu, Sn, Pb and Ni) and the precious metals (Au, Ag) from the surface of the waste material is performed by means of immersion of the waste material in an acid solution containing water, acetic acid, hydrochloric acid and hydrogen peroxide (H₂O-C₂H₄O₂-HCl-H₂O₂): this leaching stage I) is entirely innovative and may be performed in a single step.

In the case of treatment of electronic boards of computers or smartphones, the leaching stage I) according to the present invention may be carried out on all the electronic boards (or printed circuits) of computers or smartphones, without having to shred them, and allows selectively Au, Ag, Cu, Sn, Pb and Ni to be recovered in their metallic or complex form.

An acid solution containing water, acetic acid, hydrochloric acid and hydrogen peroxide (H₂O-C₂H₄O₂-HCl-H₂O₂) in accordance with stage I) of the present method typically contains:
- 2-5 M, preferably 3 - 4.5 M, hydrochloric acid
- 2-6 M, preferably 2-3 M, acetic acid;
- 1-4 M, preferably 1-2 M, hydrogen peroxide.

By way of example of the leaching procedure for electronic boards the following may be used: HCl (4.20 M), C₂H₄O₂ (2.51 M) and H₂O₂ (1.47 M). For the leaching of catalytic converter powder, 100 g of material in powder form is immersed in 1 litre of solution of HCl (3-5 M), C₂H₄O₂ (1-2 M) and H₂O₂ (1-2 M).

The concentration of the electronic boards used in stage I) in the acid aqueous solution (H₂O-C₂H₄O₂-HCl-H₂O₂) is equal to about 10-50% (w/w), preferably about 25-35% w/w, preferably about 30% w/w.

In the case of treatment of catalytic converters, the concentration of the catalytic converter powders in the acid aqueous solution (H₂O-C₂H₄O₂-HCl-H₂O₂) is equal to 10% w/v.

Stage I) according to the method of the present invention, involving leaching in an acid solution, may be typically performed at room temperature and at atmospheric pressure.

Moreover, stage I) of leaching in an acid solution may be performed in a time interval of 1-8 hours, preferably 2-4 hours, with or without stirring, preferably with stirring.

In the case of waste material consisting of electronic boards, once leaching has been completed, the electronic boards may be removed from the acid solution and, if necessary, immersed in washing water.

In the water used for washing the boards, the integrated chips, the multilayer capacitors and the Ta (tantalum) capacitors) are separated from the surface of the electronic board.

In the case of waste material consisting of catalytic converter powder, once leaching has been completed, the catalytic converter residue must be separated from the solution by means of filtration and then washed with water.

Stage II-A) of the present invention relates to the selective recovery of the precious metals silver (Ag) and gold (Au) from the acid aqueous solution obtained from stage I) in the case where said waste material comprises electronic boards of electrical equipment.

With reference to stage II-A) of the method according to the invention, in order to recover selectively the silver (Ag), the acid aqueous solution obtained from stage I) may be cooled to a temperature of between about 0°C and about 10°C, preferably to about 4°C, until a precipitate of silver chloride (AgCl) is obtained.

The precipitate of AgCl may be separated by means of methods known in the art, for example by means of filtration of the suspension, typically using a Büchner filter. Generally, AgCl is obtained with a yield of 70% and purity greater than 50%.

As regards the selective recovery of Au (stage II-A), the acid aqueous solution resulting from stage I) is subjected to the following treatments:
a) extraction using methyl isobutyl ketone (MIBK) and then the resultant organic solution comprising MIBK is subject to stripping/precipitation of Au using an oxalic acid solution;
b) treatment with ascorbic acid in order to reduce the gold to its metallic form.

For extraction in accordance with the method a), the ratio (v/v) of aqueous solution to methyl isobutyl ketone is between 2:1 and 5:1 and preferably 20 ml of MIBK per 100 ml of aqueous solution are used, the aqueous solution/MIBK ratio being therefore 5:1.

The step of extracting the acid aqueous phase using the same 20 ml of MIBK is repeated at least twice, preferably three times; the resultant organic solution with MIBK thus obtained is then separated from the aqueous solution, which is then sent to stage III) of the method according to the invention.

The gold is stripped and precipitated as metallic gold (Au⁰) from the resultant organic solution with MIBK by means of addition of a solution of oxalic acid which typically has a concentration of 5-10% (w/v), preferably 5% (w/v).

Typically a (volume) ratio of oxalic acid solution and organic solution equal to 1:1 v/v is used. Preferably 20 ml of oxalic acid for every 20 ml of organic solution with MIBK are used.

The selective recovery of the gold may be performed at a temperature of between about 80° and about 100°C, preferably between about 85°C and about 90°C for a time period in the range of about 2-8 hours, preferably in the range of about 3-5 hours.

The solid precipitate of metallic gold (Au⁰) may be separated by means of methods known to the person skilled in the art, for example by means of filtration of the suspension, typically by means of filtration using a Büchner filter. Said precipitate of metallic Au may be further washed with water, preferably distilled water. The gold is obtained with a yield greater than 90% and purity of 50%.

Then, the selective recovery of the gold is completed using ascorbic acid in a concentration of between 0.005 - 0.05 M with stirring for 1 hour at room temperature. The precipitate is separated from the solution by means of filtration and then washed with water. The recovery of the Au is 100% and the purity of the precipitate is equal to 1%.

In stage III) of the method according to the present invention, Cu is recovered selectively from the aqueous solution obtained in stage II-A) by means of case hardening with metallic Sn. In this connection, for the case hardening step a quantity of metallic Sn equal to about 80% of the stoichiometric quantity of metallic Sn required by the reaction is added, depending on the quantity of Cu present in the solution.

Typically, 2-3 g of metallic Sn for every 100 ml of aqueous solution obtained in stage II-A) are added. In any case, depending on the quantity of Cu present in the aqueous solution, the quantity of metallic Sn added may vary typically between about 1 g and about 5 g for every 100 ml.

The case hardening reaction for selective recovery of Cu may be performed for a time interval of between about 1 and 8 hours, preferably about 1-2 hours, preferably while stirring, more preferably at a stirring speed of about 200-400 rpm.

At the end of the reaction the precipitate of metallic Cu is separated by means of methods known to the person skilled in the art, typically by means of filtration of the suspension, for example using a Büchner filter and if necessary washed with water (preferably distilled water). The copper is recovered with a 98% yield and 97% purity.

Sn, Ni and Pb may be recovered from the acid aqueous solution obtained from stage II-A) rich in SnCl₂, by means of co-precipitation in the presence of oxalic acid.

For the co-precipitation, the oxalic acid may be added to the solution in a stoichiometric reaction quantity, or less than 20% of the stoichiometric quantity, considering the quantity of Sn present in the solution.

Typically 2g of oxalic acid for every 100 ml of solution obtained are used. In any case, the quantity of oxalic acid may vary depending on the quantity of Sn present in the solution.

In this connection, for every 100 ml of solution, 1 g to 10 g of oxalic acid, preferably 2-4 g of oxalic acid for every 100 ml of solution, and more preferably 2 g of oxalic acid for every 100 ml of solution obtained from stage II-A), may be added. Said step may be performed while stirring, typically at a speed of 200-400 rpm, typically at room temperature and at atmospheric pressure.

This reaction may take place in a time interval of between 1 and 8 hours, preferably in a time interval of 1-2 hours. Once the reaction has been completed, the precipitates are typically separated by means of filtration of the suspension using a Büchner filter and preferably washed with water, more preferably with distilled water.

Co-precipitates of Sn, Pb, Ni in the form of oxalates with a yield of 70-80% and a purity of 99% are obtained. Said percentages are expressed as w/w.

Stage II-B) of the present invention relates to the selective recovery of platinum and palladium from the aqueous acid solution obtained from stage I) in the case where said waste material comprises catalytic converters in powder form.

Palladium and platinum are recovered from the acid aqueous solution obtained from stage I) by means of case hardening using metallic iron in powder form. In this connection, the process is performed using metallic Fe in a concentration of 1-10 g/l for a time period of 2-4 hours, preferably with a stirring speed of 200-300 rpm. Once the reaction has been completed, the solid precipitate is recovered from the solution by means of filtration and then washed with water. The recovery obtained for the Pd and Pt is 100% and 60%, respectively, with a precious metal content of 59%.

The following examples illustrate in a non-limiting manner the hydrometallurgical method according to the present invention.

### EXAMPLES

### Example 1 (treatment of boards)

100 g of waste electronic boards, from which Al electrolytic capacitors, heat dissipators, batteries, connection peripherals, plastic connectors, transistor-type components and steel components in general were manually removed, were immersed in 332 ml of an acid aqueous solution containing 116 ml of HCL (4.2 M), 48 ml of C₂H₄0₂ (2.51 M) and 50 ml of H₂O₂ (1.47 M). The leaching reaction was carried out at room temperature and at atmospheric pressure and lasted about 3 hours. At the end of the reaction the waste electronic boards were removed and washed in water. In the washing water, the integrated chips, the multilayer capacitors and the Ta (tantalum) capacitors were separated from the surface of the electronic board.

The acid aqueous solution obtained from the leaching stage I) was subjected to recovery of the silver as AgCl by means of precipitation from the acid aqueous solution by means of cooling to a temperature of about 4°C. Said precipitate was separated by means of filtration using a Büchner filter.

The AgCl precipitate was obtained with a yield of 70% and a purity greater than 50%. The aqueous solution thus obtained, following separation of the AgCl precipitate, was subjected to extraction with methyl isobutyl ketone (MIBK), using 20 ml of MIBK for every 100 ml of aqueous solution. The extraction was carried 3 times using the same 20 ml of MIBK. Once the operation had been completed, the resultant organic solution of MIBK was subjected to stripping/precipitation/ reduction of its Au content using oxalic acid.

For this treatment, a volume of 20 ml of oxalic acid in a concentration of 5% (w/v) was added to the organic solution with resultant MIBK. After 3.5 hours of continuous stirring at a temperature of 90°C and subsequent cooling of the organic solution to room temperature, the precipitate of metallic gold (Au⁰) was recovered by means of filtration. A precipitate with a purity of 50% and a total recovery of 90% was obtained.

A treatment with ascorbic acid in a concentration of 5g/l resulted in the recovery of all the Au from the solution: the treatment was carried out at room temperature with stirring for 1 hour at 250 rpm. After separation of the metallic Au precipitate from the solution by means of filtration and subsequent washing with water, a product with 1% purity was obtained. Thereafter every 100 ml of aqueous solution resulting after extraction with MIBK were treated with 2.9 g of metallic Sn. The treatment was carried out while stirring (at 300 rpm) for 2 hours and then the precipitate of metallic Cu was separated from the aqueous solution by means of filtration. A total recovery of Cu greater than 90% with 97% purity was obtained.

2 g of oxalic acid were added in the aqueous solution after recovery of Cu and stirring was performed at 200 rpm at room temperature for 1 hour. With this process the co-precipitation of Sn, Ni and Pb as oxalates was obtained. The recovery of Pb and Ni was greater than 70% and 80% for Sn and the purity of the co-precipitates was 99%. Moreover, the recovery of metallic Sn from the solution obtained after the recovery of Cu was performed using metallic zinc in powder form. The reducing agent was added to the solution in an amount greater than 100% with respect to the stoichiometric quantity. The reaction time was 1 hour. The operation was carried out at room temperature with continuous stirring at a speed of 250 rpm.

Once the reaction had been completed, the metallic Sn precipitate was recovered from the solution by means of filtration and washing with water. At the end of the test a recovery yield of 90% with a purity of 95% was obtained.

### Example 2 (treatment of catalytic converters)

The catalytic converters were ground using a planetary mill to a size smaller than 0.5 mm. 10 g of powder obtained were added in an acid aqueous solution comprising HCl (5 M), H₂O₂ (1 M), C₂H₄O₂ (1 M) and H₂O.

The treatment was carried out for 3 hours at a stirring speed of 250 rpm at room temperature. The solid residue was then separated from the solution by means of filtration and washed with 30 ml of H₂O. The recovery of Pd and Pt was equal to 100% and 90%, respectively.

Thereafter, in order to obtain the recovery of Pd and Pt from the solution, 7.5 g/l of metallic Fe in powder form were immersed in the solution. After 2 hours stirring at a speed of 250 rpm at room temperature, the co-precipitate of Pd and Pt was separated from the solution by means of filtration and then washed with water. The recovery efficiency was 100% for Pd and 70% for Pt. The co-precipitate had a content of 12.4% palladium and 47% platinum.

### Bibliography

KR20030006792 (A), Method for recovering valuable metals from waste printed circuit boards, Kim Myeong Jun, Lee Seong O, Oh Chi Jung, 2003.
CN105420500 (A), Method for separating and extracting all metal components from waste printed circuit boards through wet metallurgy, Bai Jing, Luo Xinyun, Deng Mingqiang, 2016.
CN105297077 (A), Recovery method for metals in waste printed circuit boards, Chen Mengjun, Wang Rong, Chu Yingying, Li Yungui, Wang Bin, Chen Haiyan, Chen Shu, 2015.
CN106500113 (A), Device and method for treating light waste printed circuit boards, Guo Jianbing, Chen Zheng, Zhang Qi, 2017.
CN104775034 (A), Method for leaching and recycling metals in waste printed circuit boards in steps by using ionic liquid, Zhang Chenglong, Zhao Yingfan, Wang Jingwei, Bai Jianfeng, Yuan Wenyi, 2015.
CN104328283 (A), Method for extracting copper in waste printed circuit boards by virtue of moderately thermophilic bacteria, Zeng Weimin, Wang Yaping, Qiu Guanzhou, Liu Xueduan, Zhou Hongbo, Gu Guohua, Jiang Tao, 2015.
EP2984153 (A2), Process for the recycling of waste batteries and waste printed circuit boards in molten salts or molten metals, Riedewald Frank, 2016.
CN103801554 (A), Method for producing powder material from waste printed circuit boards, Yuan Zhigang, Yuan Kun, Yang Bin, 2014.
CN103484680 (A), Method for leaching copper in waste printed circuit boards (PCBs) by mixed bacteria, Liang Guobin, Ma Fei, Jiang Li, Liu Weiping, Zhou Quanfa, 2014.
US2012318681 (A1), Complete non-cyanogens wet process for green recycling of waste printed circuit board, Zhang Shenge, Li Bin, Pan Dean, Tian Jianjun, Liu Bo, 2012.
WO2015052658 (A1), Hydrometallurgy process for the recovery of materials from electronic boards, Brunori Claudia, Fontana Danilo, De Carolis Roberta, Pietrantonio Massimiliana, Pucciarmati Stefano, Guzzinati Roberta, Torelli Giorgia Nadia, 2015.

## Claims

1. Hydrometallurgical method for the recycling and recovery of base metals and precious metals from a waste material comprising catalytic converter powder and/or electronic boards of electrical and electronic equipment, the hydrometallurgical method comprising the following stages;
I) Leaching the base metals and the precious metals from the surface of said waste material by means of immersion of the waste material, if necessary pre-treated, in an acid solution containing water, acetic acid, hydrochloric acid, hydrogen peroxide (H₂O-C₂H₄O₂-HCl-H₂O₂) and subsequent removal of the waste material from the acid solution as defined above;
**II-A)** selective recovery of the precious metals silver (Ag) and gold (Au) from the acid aqueous solution obtained from stage I) in the case where said waste material comprises electronic boards of electrical equipment;
**III)** selective recovery of the base metals (Cu), tin (Sn), lead (Pb) and nickel (Ni) from the acid aqueous solution obtained from the stage II-A);
**II-B)** selective recovery of platinum (Pt) and palladium (Pd) from the aqueous acid solution obtained from stage I) in the case where said waste material comprises catalytic converters in powder form.

2. Hydrometallurgical method according to Claim 1, wherein the selective recovery of Ag during the stage II-A) is performed by means of precipitation as silver chloride (AgCl) and separation of said precipitate from the acid aqueous solution.

3. Hydrometallurgical method according to the preceding claims, wherein, following the step of recovery of the Ag, the gold (Au) is recovered from the acid aqueous solution by means of: a) extraction with methyl isobutyl ketone (MIBK) and subsequent stripping/precipitation of Au from the resultant organic solution using a solution with oxalic acid and separation of the precipitate of metallic Au (Au⁰) thus obtained; b) reduction with ascorbic acid and separation of the metallic Au precipitate obtained.

4. Hydrometallurgical method according to any one of Claims 1-3, wherein the selective recovery of Cu during stage III) is performed by means of case hardening with metallic Sn and subsequent separation of the metallic Cu precipitate obtained.

5. Hydrometallurgical method according to any one of Claims 1-4, wherein the selective recovery of Sn, Ni and Pb during stage III) is performed by means of co-precipitation with oxalic acid and separation of the co-precipitates of Sn, Ni and Pb as oxalates thus obtained, or recovery of Sn by means of case hardening with zinc metal powder.

6. Hydrometallurgical method according to Claim 1, wherein the recovery of platinum (Pt) and palladium (Pd) from the acid aqueous solution during stage II-B) is performed by means of case hardening with metallic iron (Fe).

7. Hydrometallurgical method according to Claim 1, wherein said acid solution containing water, acetic acid, hydrochloric acid, hydrogen peroxide (H₂O-C₂H₄O₂-HCl-H₂O₂) contains hydrochloric acid (2-5 M), acetic acid (1-6 M) and hydrogen peroxide (1-4 M).

8. Hydrometallurgical method according to any one of Claims 1-5 and 7, wherein in stage I) the concentration of the electronic boards used in the acid aqueous solution (H₂O-C₂H₄O₂-HCl-H₂O₂) is equal to about 10-50% w/w, preferably about 25-35% w/w, and more preferably about 30% w/w.

9. Method according to each of Claims 1-8, wherein the leaching of stage I) is performed at room temperature and at atmospheric pressure for 1-8 hours, preferably 2-4 hours.

10. Method according to Claim 2, wherein the precipitation of AgCl is performed by means of cooling of the acid aqueous solution obtained from stage I) to a temperature of between 0° and 10°C, preferably to about 4°C.

11. Method according to Claim 3, wherein said extraction performed for the recovery of Au is **characterized by**: a) a ratio (v/v) of aqueous solution and methyl isobutyl ketone (MIBK) of between 2:1 and 5:1, and preferably equal to 5:1; b) reduction with ascorbic acid in a concentration of between 0.005 and 0.05 M.

12. Method according to Claim 11, wherein the gold is stripped/precipitated from the resultant organic solution with MIBK by means of addition of a solution of oxalic acid with a concentration of 5% to 10% (w/v).

13. Method according to Claim 4, wherein said case hardening for recovery of Cu is performed by adding a quantity of metallic Sn equal to about 80% of the stoichiometric quantity of metallic Sn required by the reaction, depending on the quantity of Cu present in the solution.

## Patentansprüche

1. Hydrometallurgisches Verfahren zum Recycling und zur Rückgewinnung von unedlen Metallen und Edelmetallen aus einem Abfallmaterial, das Katalysatorpulver und/oder elektronische Platinen von elektrischen und elektronischen Geräten umfasst, wobei das hydrometallurgische Verfahren die folgenden Phasen umfasst:
**I)** Auslaugen der unedlen Metalle und der Edelmetalle von der Oberfläche des Abfallmaterials durch Eintauchen des Abfallmaterials, falls erforderlich vorbehandelt, in eine Säurelösung, die Wasser, Essigsäure, Salzsäure, Wasserstoffperoxid (H₂O-C₂H₄O₂-HCl-H₂O₂) enthält, und anschließende Entfernung des Abfallmaterials aus der Säurelösung wie oben definiert;
**II-A)** selektive Rückgewinnung der Edelmetalle Silber (Ag) und Gold (Au) aus der in Phase I) erhaltenen sauren wässrigen Lösung, wenn das Abfallmaterial elektronische Platinen von Elektrogeräten umfasst;
**III)** selektive Rückgewinnung der unedlen Metalle (Cu), Zinn (Sn), Blei (Pb) und Nickel (Ni) aus der in Phase II-A erhaltenen sauren wässrigen Lösung);
**II-B)** selektive Rückgewinnung von Platin (Pt) und Palladium (Pd) aus der in Phase I) erhaltenen wässrigen Säurelösung, wenn das Abfallmaterial Katalysatoren in Pulverform umfasst.

2. Hydrometallurgisches Verfahren nach Anspruch 1, wobei die selektive Gewinnung von Ag während der Phase II-A) mittels Ausfällung als Silberchlorid (AgCl) und Trennung des Niederschlags von der sauren wässrigen Lösung erfolgt.

3. Hydrometallurgisches Verfahren nach den vorstehenden Ansprüchen, wobei nach dem Schritt der Gewinnung des Ag das Gold (Au) aus der sauren wässrigen Lösung gewonnen wird durch: a) Extraktion mit Methylisobutylketon (MIBK) und anschließendes Strippen/Ausfällen von Au aus der resultierenden organischen Lösung unter Verwendung einer Lösung mit Oxalsäure und Abtrennen des Niederschlags von so erhaltenem metallischem Au (Au °); b) Reduktion mit Ascorbinsäure und Abtrennung des erhaltenen metallischen Au-Niederschlags.

4. Hydrometallurgisches Verfahren nach einem der Ansprüche 1 bis 3, wobei die selektive Rückgewinnung von Cu während der Phase III) mittels Einsatzhärten mit metallischem Sn und anschließender Trennung des erhaltenen metallischen Cu-Niederschlags erfolgt.

5. Hydrometallurgisches Verfahren nach einem der Ansprüche 1 bis 4, wobei die selektive Rückgewinnung von Sn, Ni und Pb während der Phase III) mittels Mitfällung mit Oxalsäure und Trennung der Mitfällungen von Sn, Ni und Pb als so erhaltene Oxalate oder Rückgewinnung von Sn mittels Einsatzhärten mit Zinkmetallpulver erfolgt.

6. Hydrometallurgisches Verfahren nach Anspruch 1, wobei die Rückgewinnung von Platin (Pt) und Palladium (Pd) aus der sauren wässrigen Lösung während Phase II-B) mittels Einsatzhärten mit metallischem Eisen (Fe) erfolgt.

7. Hydrometallurgisches Verfahren nach Anspruch 1, wobei die Säurelösung, die Wasser, Essigsäure, Salzsäure, Wasserstoffperoxid (H₂O-C₂H₄O₂-HCl-H₂O₂) enthält, Salzsäure (2-5 M), Essigsäure (1-6 M) und Wasserstoffperoxid (1-4 M) enthält.

8. Hydrometallurgisches Verfahren nach einem der Ansprüche 1 bis 5 und 7, wobei in Phase I) die Konzentration der in der sauren wässrigen Lösung (H₂O-C₂H₄O₂-HCl-H₂O₂) verwendeten elektronischen Platinen etwa 10-50 % (Gew.-%), vorzugsweise etwa 25-35 % (Gew.-%) und mehr bevorzugt etwa 30 % (Gew.-%) beträgt.

9. Verfahren gemäß jedem der Ansprüche 1 bis 8, wobei das Auslaugen in Phase I) bei Raumtemperatur und atmosphärischem Druck für 1-8 Stunden, vorzugsweise 2-4 Stunden, durchgeführt wird.

10. Verfahren nach Anspruch 2, wobei die Ausfällung von AgCl durch Abkühlen der aus Phase I) erhaltenen sauren wässrigen Lösung auf eine Temperatur zwischen 0° und 10 °C, vorzugsweise auf etwa 4 °C, durchgeführt wird.

11. Verfahren nach Anspruch 3, wobei die Extraktion zur Gewinnung von Au **gekennzeichnet ist durch:** a) ein Verhältnis (Vol.-%) von wässriger Lösung und Methylisobutylketon (MIBK) zwischen 2:1 und 5:1, vorzugsweise gleich 5:1; b) Reduktion mit Ascorbinsäure in einer Konzentration zwischen 0,005 und 0,05 M.

12. Verfahren nach Anspruch 11, wobei das Gold aus der resultierenden organischen Lösung mit MIBK durch Zugabe einer Oxalsäurelösung mit einer Konzentration von 5 % bis 10 % (Gew.-/Vol.-%) abgetrennt/ausgefällt wird.

13. Verfahren nach Anspruch 4, wobei das Einsatzhärten zur Rückgewinnung von Cu durch Zugabe einer Menge an metallischem Sn durchgeführt wird, die etwa 80 % der stöchiometrischen Menge an metallischem Sn entspricht, die für die Reaktion erforderlich ist, abhängig von der in der Lösung vorhandenen Cu-Menge.

## Revendications

1. Procédé hydrométallurgique pour le recyclage et la récupération de métaux de base et de métaux précieux à partir d'un matériau de rebut comprenant de la poudre de convertisseur catalytique et/ou des cartes électroniques d'équipements électriques et électroniques, le procédé hydrométallurgique comprenant les étapes suivantes ;
**I)** Lixiviation des métaux communs et des métaux précieux de la surface dudit matériau de rebut par immersion du matériau de rebut, si nécessaire prétraités, dans une solution acide contenant de l'eau, de l'acide acétique, de l'acide chlorhydrique, du peroxyde d'hydrogène (H₂O-C₂H₄O₂-HCl-H₂O₂), puis retrait du matériau de rebut de la solution acide, comme défini ci-dessus ;
**II-A)** récupération sélective des métaux précieux argent (Ag) et or (Au) à partir de la solution aqueuse acide obtenue à l'étape I) dans le cas où ledit matériau de rebuts comprend des cartes électroniques d'équipements électriques ;
**III)** récupération sélective des métaux communs (Cu), de l'étain (Sn), du plomb (Pb) et du nickel (Ni) à partir de la solution aqueuse acide obtenue à l'étape II-A) ;
**II-B)** récupération sélective du platine (Pt) et du palladium (Pd) de la solution acide aqueuse obtenue à l'étape I) dans le cas où ledit matériau de rebut comprend des convertisseurs catalytiques sous forme de poudre.

2. Procédé hydrométallurgique selon la revendication 1, dans lequel la récupération sélective de l'Ag au cours de l'étape II-A) est réalisée par précipitation sous forme de chlorure d'argent (AgCl) et séparation dudit précipité de la solution aqueuse acide.

3. Procédé hydrométallurgique selon les revendications précédentes, dans lequel, après l'étape de récupération de l'Ag, l'or (Au) est récupéré de la solution aqueuse acide au moyen de : a) l'extraction avec la méthylisobutylcétone (MIBK) et le décapage/précipitation ultérieurs de l'Au de la solution organique résultante en utilisant une solution avec de l'acide oxalique et la séparation du précipité de l'Au métallique (Au⁰) ainsi obtenu ; b) réduction par l'acide ascorbique et séparation du précipité métallique d'Au obtenu.

4. Procédé hydrométallurgique selon l'une quelconque des revendications 1 à 3, dans lequel la récupération sélective du Cu au cours de l'étape III) est réalisée au moyen d'une cémentation avec de l'étain métallique et d'une séparation ultérieure du précipité de Cu métallique obtenu.

5. Procédé hydrométallurgique selon l'une quelconque des revendications 1 à 4, dans lequel la récupération sélective de Sn, Ni et Pb au cours de l'étape III) est effectuée par coprécipitation avec de l'acide oxalique et séparation des coprécipités de Sn, Ni et Pb sous forme d'oxalates ainsi obtenus, ou récupération de Sn par cémentation avec de la poudre de métal de zinc.

6. Procédé hydrométallurgique selon la revendication 1, dans lequel la récupération du platine (Pt) et du palladium (Pd) de la solution aqueuse acide au cours de l'étape II-B) est effectuée au moyen d'une cémentation avec du fer métallique (Fe).

7. Procédé hydrométallurgique selon la revendication 1, dans lequel ladite solution acide contenant de l'eau, de l'acide acétique, de l'acide chlorhydrique, du peroxyde d'hydrogène (H₂O-C₂H₄O₂-HCl-H₂O₂) contient de l'acide chlorhydrique (2-5 M), de l'acide acétique (1-6 M) et du peroxyde d'hydrogène (1-4 M).

8. Procédé hydrométallurgique selon l'une quelconque des revendications 1 à 5 et 7, dans lequel, à l'étape I), la concentration des cartes électroniques utilisées dans la solution aqueuse acide (H₂O-C₂H₄O₂-HCl-H₂O₂) est égale à environ 10-50 % p/p, de préférence à environ 25-35 % p/p, et plus préférentiellement à environ 30 % p/p.

9. Procédé selon chacune des revendications 1 à 8, dans lequel la lixiviation de l'étape I) est effectuée à température ambiante et à pression atmosphérique pendant 1 à 8 heures, de préférence 2 à 4 heures.

10. Procédé selon la revendication 2, dans lequel la précipitation d'AgCl est effectuée par refroidissement de la solution aqueuse acide obtenue à l'étape I) à une température comprise entre 0° et 10 °C, de préférence à environ 4 °C.

11. Procédé selon la revendication 3, dans lequel l'extraction réalisée pour la récupération de Au est **caractérisée par:** a) un rapport (v/v) de solution aqueuse et de méthylisobutylcétone (MIBK) compris entre 2:1 et 5:1, et de préférence égal à 5:1 ; b) réduction par l'acide ascorbique à une concentration comprise entre 0,005 et 0,05 M.

12. Procédé selon la revendication 11, dans lequel l'or est décapé/précipité de la solution organique résultante avec le MIBK par l'ajout d'une solution d'acide oxalique d'une concentration de 5 % à 10 % (p/v).

13. Procédé selon la revendication 4, dans lequel ladite cémentation pour la récupération du Cu est réalisée par l'ajout d'une quantité de Sn métallique égale à environ 80 % de la quantité stœchiométrique de Sn métallique nécessaire à la réaction, en fonction de la quantité de Cu présente dans la solution.
